# EUROPÄISCHE PATENTSCHRIFT

(11) **EP 3 197 268 B1**
(45) Veröffentlichungstag und Bekanntmachung des Hinweises auf die Patenterteilung: **19.09.2018**
(21) Anmeldenummer: 15808325.3
(22) Anmeldetag: 28.09.2015
(51) Int. Cl.: A01G 23/095

(54) **VORRICHTUNG ZUM ENTFERNEN DER ÄSTE VON LEBENDEN BÄUMEN**
DEVICE FOR REMOVING BRANCHES FROM LIVING TREES
DISPOSITIF DESTINÉ À ÉLIMINER DES BRANCHES D'ARBRES VIVANTS

(30) Priorität: 26.09.2014 DE 102014014467
(43) Veröffentlichungstag der Anmeldung: 02.08.2017
(73) Patentinhaber: advaligno GmbH, 88045 Friedrichshafen (DE)
(72) Erfinder: JORDAN, Ernst, 31535 Neustadt (DE)
(74) Vertreter: Patentanwälte Thömen & Körner
(86) Internationale Anmeldenummer: PCT/DE2015/100405
(87) Internationale Veröffentlichungsnummer: WO 2016/045666

(56) Entgegenhaltungen:
- DE-B4- 10 124 611
- DE-U1- 9 320 410
- US-A- 3 545 509
- US-A1- 2007 181 217
- US-B1- 8 517 066

## Beschreibung

Die Erfindung geht aus von einer Vorrichtung zum Entfernen der Äste von lebenden Bäumen gemäß Oberbegriff des Patentanspruches 1. Entsprechende Vorrichtungen werden auch als Entastungsvorrichtungen bezeichnet und das Entfernen der Äste wird allgemein als Wertästung bzw. Ästung von Bäumen beschrieben.

Das Entfernen der Äste von lebenden Bäumen ist sowohl für die Forstwirtschaft, als auch für die Holz- und Möbelindustrie von großer Bedeutung, weil für die Holzverarbeitung astreine Baumstämme bevorzugt werden. Durch das Entfernen der Äste von lebenden Bäumen wird ein erheblicher Wertgewinn erzielt, weil dadurch die Erzeugung von astfreiem Schnittholz möglich ist.

Überwiegend kommt die Entastung bei Kiefern und Fichten in Betracht. Wenn diese einmal entastet worden sind, wachsen sie anschließend über viele Jahre hinweg weiter und verbreitern dabei ihren Durchmesser, jedoch ohne die zuvor entfernten Äste, so dass nach dem Fällen dieser Bäume das gewünschte astfreie Holzmaterial für die Herstellung von Möbeln zur Verfügung steht. Die Entastung eines Baumes wird nur einmalig durchgeführt. Zum Zeitpunkt der Entastung liegt der mittlere Durchmesser der Bäume bei etwa 30 cm, während der Durchmesser im Endzustand beim Fällen des Baumes über einen Meter betragen kann. Üblicherweise werden die Äste im unteren Bereich der Bäume bis zu einer Höhe von 10 m - 20 m über dem Erdboden entfernt.

Grundsätzlich kann man die Äste eines lebenden Baumes manuell mit einer Säge entfernen, mit welcher die Zweige und Äste direkt am Stamm abgesägt werden. Es ist jedoch ohne weiteres ersichtlich, dass eine solche manuelle Wertästung extrem aufwendig und kostenintensiv ist. Neben der Säge selbst sind weitere Hilfsmittel wie Leitern oder dergleichen erforderlich, um die Äste auch in größeren Höhen zu entfernen.

Man ist deshalb auch schon dazu übergegangen, eine maschinelle Entfernung der Äste durchzuführen. In der Zeitschrift "Forstarchiv", 44. Jahrgang, Heft-Nr. 11, November 1973, Seiten 237 - 240 ist zu diesem Zweck eine Klettersäge beschrieben, mit welcher die Äste eines Baumstammes automatisch entfernt werden können.

Die bekannte Klettersäge umfasst ein den Baumstamm umgreifendes Gestell mit Antriebsrädern, die unter Druck am Baumstamm anliegen. Die Antriebsräder werden von einem eigenen Motor angetrieben, wodurch die Klettersäge am Baumstamm bis zu einer gewünschten einstellbaren Höhe schraubenlinienförmig hochklettern kann. Auf dem Gestell ist wenigstens eine handelsübliche Motorkettensäge mit einer auf einem Sägeschwert umlaufenden Sägekette angeordnet.

Durch das Dokument DE 4 423 594 A1 ist eine weitere Entastungsvorrichtung zum Entfernen der Äste von lebenden Bäumen bekannt. Als wesentliche Bestandteile umfasst der Aufbau dieser Entastungsvorrichtung einen kreisbogenförmig verlaufenden und an seinen Enden offenen Drehkranzträger, auf dem sich ein ebenfalls kreisförmig verlaufender und an seinen Enden offener Drehkranz befindet, der relativ zum ortsfesten Drehkranzträger beweglich ist. Der Drehkranz ist in der Weise beweglich, dass er eine geschlossene Kreisbahn beschreibt und umläuft, dass er sich also auf dem Umfang des Baumstammes herum bewegen kann. Auf dem Drehkranz befindet sich eine an sich bekannte und selbsttätig angetriebene Astsäge. Während der Drehkranz sich bewegt und eine geschlossene Kreisbahn beschreibt können somit alle Äste auf dem Umfang des Baumstammes abgesägt werden.

Sowohl beim Einsatz der in der genannten Zeitschrift "Forstarchiv" beschriebenen Klettersäge, als auch bei der Entastungsvorrichtung gemäß der DE 4 423 594 A1 verläuft das Sägeschwert der verwendeten Motorkettensäge parallel und senkrecht zum Baumstamm, wobei der Abstand zum Baumstamm etwa 1 - 2 cm beträgt.

Nachteilig bei den bekannten Kettensägen ist es, dass das relativ lange und senkrechte am Baumstamm geführte Sägeschwert zu Beschädigungen an der Rinde führen kann. Dies ist darauf zurückzuführen, dass der Baum nicht immer genau senkrecht verläuft. Bei geringfügigen Abweichungen bewegt sich das obere Ende des Sägeschwerts so nahe am Baumstamm, dass es diesen berührt und in die Rinde einschneidet. Bei einer solchen Verletzung der Rinde besteht die Gefahr eines holzzersetzenden und holzschädigenden Pilzbefalls.

Außerdem besteht die Gefahr, dass der für den Baum lebenswichtige Saftfluss, der in der Rinde in senkrechter Richtung entlang des Baumstammes erfolgt, unterbrochen wird. Dieser Saftfluss setzt in erheblichem Maße im Frühjahr ein und dauert bis zum späten Herbst.

In dem gattungsbildenden Dokument DE 101 24 61 1 B4 ist eine Entastungsvorrichtung zum Entfernen der Äste von lebenden Bäumen beschrieben, die zum Entfernen der Äste eine Sägeeinheit umfasst, die aus drei separaten Kreissägen mit jeweils einem eigenen Antriebsmotor besteht. Die Sägeeinheit ist dabei auf einem Rahmengestellt angeordnet.

Die bekannte Vorrichtung umfasst ferner Antriebsketten in Form von breiten mit einer glatten Oberfläche versehenen Riemen. Mit Hilfe dieser Antriebsketten, die mit Druck am Baum anliegen, fährt die Vorrichtung selbständig am Baumstamm nach oben, wobei die Äste mittels der Sägeeinheit entfernt werden.

Damit alle Äste über den gesamten Umfang des Baumstammes erfasst werden, pendelt die Sägeeinheit in horizontaler Richtung oszillierend um den Baumstamm. Wenn das Rahmengestell mit der Sägeeinheit die gewünschte Höhe erreicht hat, fährt es am Baumstamm wieder nach unten.

Wegen des sperrigen Rahmengestells und wegen der drei einzelnen Kreissägen mit jeweils einem zugeordneten eigenen Antriebsmotor ist die bekannte Vorrichtung als aufwendig und reparaturanfällig anzusehen. Wenn beispielsweise nur ein Antriebsmotor für eine Kreissäge beim robusten Betrieb im Wald ausfällt, ist die gesamte Vorrichtung nicht mehr arbeitsfähig. Zudem ist die Vorrichtung wegen der vielen Einzelteile nicht nur reparaturanfällig, sondern auch teuer und vergleichsweise schwer, wodurch die Handhabung durch Bedienungspersonen erschwert ist.

Durch die oszillierende Bewegung der einzelnen Kreissägen in horizontaler Richtung wird zudem die Geschwindigkeit begrenzt, mit welcher die Vorrichtung den Baumstamm herauffahren kann. Bei zu hoher Geschwindigkeit besteht die Gefahr, dass nicht alle Äste des Baumstammes erfasst werden, d.h., die erforderliche oszillierende Bewegung der Kreissägen bremst die Geschwindigkeit und damit den Wirkungsgrad der Vorrichtung.

Aus der DE 93 20 410 U1 ist eine Vorrichtung zum Entfernen von Ästen an lebenden Bäumen vorbekannt. Dortige Schneidwerkzeuge bestehen aus Kreissägeblättern mit zugeordnetem Antriebsmotor. Jedes der Entastungsaggregate ist am Ende eines Gelenkhebels gelagert, wobei jeder Gelenkhebel schwenkbar am Lenker einer sichelförmigen Scheibe angelenkt und mit einem Linearantrieb gekoppelt ist, der in Abhängigkeit einer Sensorsteuerung die Gelenkhebel synchron mit der Drehbewegung der sichelförmigen Scheibe steuert. Dies hat zur Folge, dass die Kreissägeblätter stets tangential an einem Baumstamm anliegen und dadurch glatte Schnittflächen und hohe Schnittleistungen auch bei stärkeren Ästen gewährleisten.

Der Erfindung liegt die Aufgabe zugrunde, eine verbesserte Vorrichtung zum Entfernen der Äste von lebenden Bäumen zu schaffen, welche einfach und sauber zu handhaben ist und eine rasche und gleichwohl optimale und gleichmäßige Entastung von Bäumen ermöglicht, und zwar unabhängig vom jeweiligen Durchmesser des Baumes.

Die Lösung dieser Aufgabe erfolgt bei der im Oberbegriff des Patentanspruchs 1 vorausgesetzten Vorrichtung durch die Merkmale des kennzeichnenden Teils des Patentanspruchs 1.

Bei der Erfindung besteht das Schneidwerkzeug aus zwei einander gegenüberliegende Kreissägen mit nicht geschränkten Zähnen. Jede Kreissäge wird von einem eigenen Elektromotor angetrieben, und die beiden Kreissägen bewegen sich kreisförmig um den Baum herum. In vorteilhafter Weise ist dabei vorgesehen, dass die jeweiligen Zähne der beiden Kreissägen, die in ihrer Schneidposition mit einem Ast in Berührung kommen und den Ast absägen, unabhängig vom jeweiligen Durchmesser des Baumes immer diametral und im gleichen Abstand vom Baum verlaufen. Die Äste werden somit unabhängig vom jeweils vorhandenen konkreten Durchmesser des Baumes stets an diametralen Punkten eines im genannten Abstand um den Baum gedachten Kreises abgesägt.

Die voranstehend beschriebenen Merkmale sind von Bedeutung, wenn man berücksichtigt, dass sich die Bäume nach oben hin verjüngen und oben dünner und unten dicker sind. Wenn die erfindungsgemäße Vorrichtung sich am Baum nach oben bewegt, um die Äste abzusägen, verjüngt sich deshalb der Durchmesser des Baumes. Gleichwohl werden die Äste bei der Erfindung an jeder Stelle des Baumes im gleichen Abstand dicht am Baum abgesägt.

Die Erfindung umfasst einen in waagerechter Richtung in einem Kreis um den Baum herum drehbaren Drehtisch. Dieser Drehtisch umfasst seinerseits zwei halbkreisförmige Segmente, die mittels einer gemeinsamen Achse miteinander in Verbindung stehen und um diese Achse auseinanderklappbar und in ihrer Arbeitsposition zu einem Kreis zusammenklappbar und arretierbar sind. Auf jedem halbkreisförmigen Segment ist ein um einen Drehpunkt verschwenkbarer Hebel mit je einem Kraftarm und je einem Lastarm angeordnet. An den den Drehpunkten der Hebel abgewandten äußeren Enden der Lastarme ist jeweils eine der beiden Kreissägen angeordnet, die sich zusammen mit dem Drehtisch kreisförmig um den Baum herumbewegen.

In vorteilhafter Weise sind die Kreissägen derart auf den zugeordneten Lastarmen angeordnet, und die Hebel sind in der Weise verschwenkbar, dass die voranstehend beschriebene diametrale Anordnung der Zähne der beiden Kreissägen gewährleistet ist. Die den Ast jeweils absägenden Zähne der beiden Kreissägen verlaufen also unabhängig vom aktuellen Durchmesser des Baumes immer diametral und im gleichen Abstand vom Baum, und die Äste des Baumes werden unabhängig vom jeweiligen Durchmesser des Baumes stets an diametralen Punkten abgesägt.

Eine vorteilhafte Ausgestaltung der Erfindung besteht darin, dass der Abstand der gegenüberliegenden Zähne der Kreissägen vom Baum durch zwei auf den Hebeln diametral gegenüberliegend angeordneten und radial verschiebbaren und arretierbaren Abstandsrädern einstellbar ist. Dadurch lässt sich in vorteilhafter Weise festlegen, wie kurz die abgesägten Aststummel sind. In der Praxis werden die Abstandsräder so eingestellt, dass die Äste möglichst kurz abgesägt werden, ohne die Rinde des Baumes bzw. die am Fuß des Astes bei den Bäumen vorhandene Verdickung zu beschädigen.

Eine andere vorteilhafte Weiterbildung der Erfindung besteht darin, dass jedem Hebel ein Pneumatikzylinder mit je einer Kolbenstange zugeordnet ist, wodurch die Hebel verschwenkbar sind. Jeder Pneumatikzylinder besitzt einen eigenen elektrisch betriebenen Kompressor, der jeweils mit Hilfe einer eigenen Batterie betrieben wird. Durch das Verschwenken der Hebel können die Abstandsräder an den Baumstamm herangefahren werden, und gleichfalls werden auch die beiden Kreissägen in Richtung des Baumstammes verschwenkt. Dabei befinden sich die Kreissägen in einem durch die Abstandsräder vorgegebenen möglichst geringen Abstand vom Baum. Für dieses Verschwenken sind vergleichsweise geringe Brücke für die Pneumatikzylinder erforderlich, sodass diese mit Hilfe einer Batterie betrieben werden können.

Eine weitere zweckmäßige Ausgestaltung der Erfindung besteht darin, dass der Drehtisch über drei um 120 Grad kreisförmig zueinander versetzt angeordnete Pneumatikzylinder mit Kolbenstangen mit einem unterhalb des Drehtisches befindlichen und zusammen mit dem Drehtisch aufklappbaren und zusammenklappbaren Rahmen verbunden ist. An diesem Rahmen sind drei um 120 Grad kreisförmig zueinander versetzt angeordnete Antriebsriemen vorgesehen, mit denen die Vorrichtung am Baumstamm entlang nach oben und nach unten bewegt werden kann.

In zweckmäßiger Weise ist dabei vorgesehen, dass die Antriebsriemen durch Veränderung des gegenseitigen Abstandes zwischen dem Drehtisch und dem Rahmen mittels der drei Pneumatikzylinder radial bewegbar und mit einem wählbaren Druck an die Rinde des Baumes andrückbar sind.

Eine vorteilhafte Weiterbildung der Erfindung sieht vor, dass die drei Pneumatikzylinder zwischen dem Drehtisch und dem Rahmen über einen Druckschlauch mit einem außerhalb der Vorrichtung befindlichen Kompressor gemeinsam betrieben werden.

Mit Hilfe dieses Kompressors lässt sich der Druck einstellen, mit welchem die Antriebsriemen an der Rinde des Baumes anliegen.

Gemäß einer anderen vorteilhaften Weiterbildung der Erfindung ist vorgesehen, dass der Drehtisch in seiner zusammengeklappten Arbeitsstellung von einem unterhalb des Drehtisches angeordneten Zahnrad angetrieben ist, welches seinerseits von einem Elektromotor angetrieben ist, und welches zusammen mit dem Drehtisch auseinanderklappbar und zusammenklappbar ist. Zweckmäßigerweise sind der das Zahnrad antreibende Elektromotor und die Elektromotoren der Kreissägen mit einem außerhalb der Vorrichtung befindlichen Stromaggregat über eine elektrische Leitung verbunden.

Weitere vorteilhafte Ausgestaltungen der Erfindung ergeben sich aus der Beschreibung der Figuren. Anhand des in der Zeichnung dargestellten Ausführungsbeispiels wird die Erfindung nachfolgend näher erläutert.
Es zeigen:
- Fig. 1: Eine perspektivische Darstellung einer erfindungsgemäßen Vorrichtung im geschlossenen zusammengeklappten Zustand,
- Fig. 2: eine perspektivische Darstellung der Vorrichtung gemäß Fig. 1, jedoch im auseinandergeklappten offenen Zustand,
- Fig. 3: eine Draufsicht auf eine auseinandergeklappte Vorrichtung, die um einen Baum herum positioniert ist,
- Fig. 4: eine Draufsicht auf die erfindungsgemäße Vorrichtung mit einem Baum in geschlossener Arbeitsstellung,
- Fig. 5: eine Darstellung gemäß Fig. 4, jedoch mit einem Baum mit kleinerem Durchmesser,

- Fig. 6: eine Seitenansicht einer sich entlang eines Baumes nach oben bewegenden erfindungsgemäßen Vorrichtung,
- Fig. 7: eine Seitenansicht gemäß Fig. 6, mit außerhalb der Vorrichtung angeordnetem Kompressor und Stromaggregat,
- Fig. 8: eine schematische Draufsicht auf die beiden Kreissägen der Vorrichtung zur Verdeutlichung der diametralen Anordnung, und
- Fig. 9: eine schematische Seitenansicht der beiden Kreissägen.

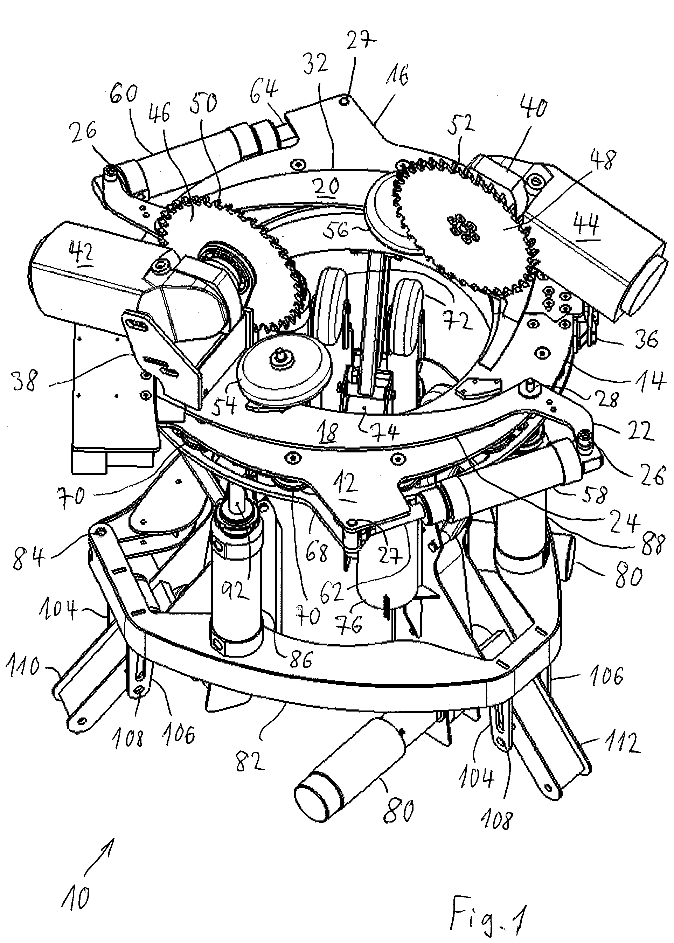

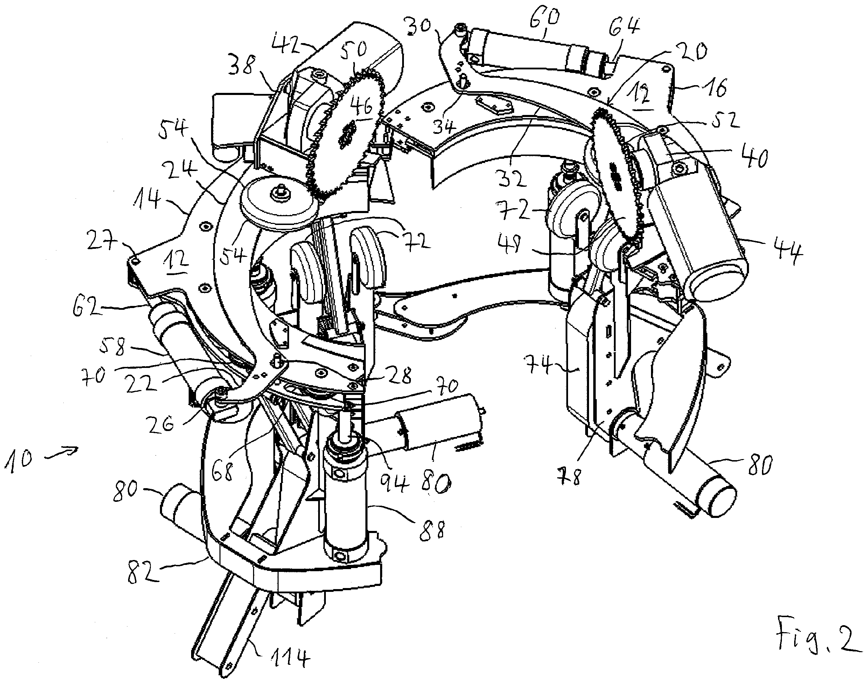

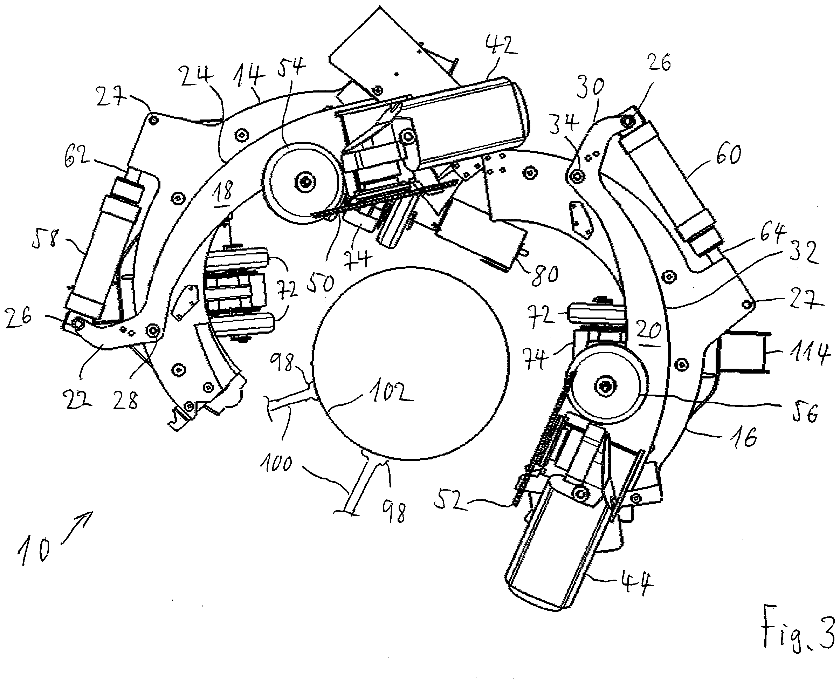

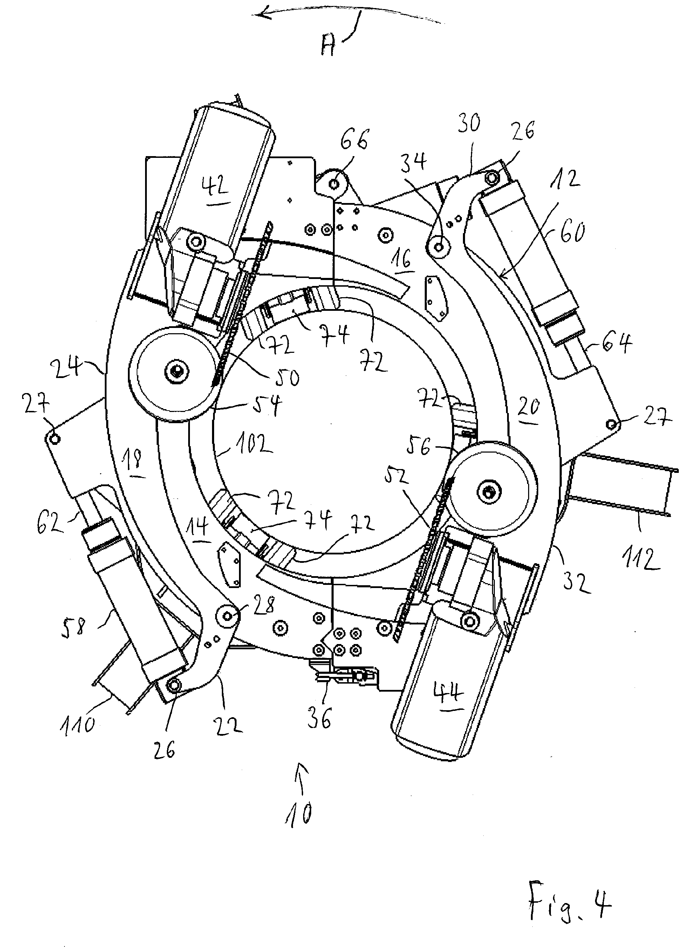

Wie in Fig. 1 - Fig. 5 zu erkennen ist, umfasst die Vorrichtung 10 einen Drehtisch 12, der aus zwei halbkreisförmigen Segmenten 14 und 16 besteht. Die beiden halbkreisförmigen Segmente 14 und 16 sind um eine in Fig. 4 dargestellte gemeinsame Achse 66 verschwenkbar und in eine geöffnete Ruhestellung auseinanderklappbar (Fig. 2 + 3) und in eine Arbeitsstellung zu einem Kreis zusammenklappbar und mittels einer Verriegelung 36 arretierbar (Fig. 1, 4 und 5).

Auf jedem Segment 14, 16 ist jeweils ein Hebel 18 und 20 angeordnet, wobei der Hebel 18 einen Kraftarm 22 und einen Lastarm 24 aufweist, und wobei der andere Hebel 20 entsprechend einen Kraftarm 30 und einen Lastarm 32 besitzt. Beide Hebel sind um einander gegenüberliegende Drehpunkte 28 und 34 verschwenkbar auf den zugeordneten Segmenten 14 und 16 des Drehtisches 12 angeordnet.

An den äußeren, den jeweiligen Drehpunkten abgewandten Enden jedes Lastarmes 22, 24 ist je eine Motorhalterung 38 und 40 befestigt, von denen jede eine Kreissäge 46, 48 mit jeweils einem Elektromotor 42, 44 trägt. Beide Kreissägen 46 und 48 besitzen nicht geschränkte Zähne 50 bzw. 52.

Neben jeder Motorhalterung 38, 40 ist auf jedem Lastarm 24 und 32 jeweils ein Abstandsrad 54 und 56 angeordnet. Jedes Abstandsrad 54, 56 ist in radialer Richtung verschiebbar und arretierbar. In der Arbeitsposition der Vorrichtung 10 liegen die beiderseitigen Abstandsräder 54, 56 am Baum 102 an und definieren den Abstand der Kreissägen 46, 48 vom Baum 102. Durch die Position der Abstandsräder 54, 56 wird demnach bestimmt, wie kurz die Äste 100 abgesägt werden.

Die Abstandsräder 54, 56 werden dadurch in Berührung mit dem Baum 102 gebracht, dass die beiden Hebel 18 und 20 um die jeweiligen Drehpunkte 28, 34 verschwenkt werden. Zu diesem Zweck ist zwischen den äußeren Enden der jeweiligen Kraftarme 22 und 30 und den halbkreisförmigen Segmenten 14, 16 jeweils ein Pneumatikzylinder 58 und 60 mit je einer Kolbenstange 62 und 64 vorgesehen. Die Pneumatikzylinder 58 und 60 sind dabei über Verbindungsteile 26 und 27 mit den Kraftarmen 22, 30 und den Segmenten 14, 16 verbunden.

Durch Ausfahren der Kolbenstangen 62, 64 werden die Lastarme 24 und 32, und damit die Abstandsräder 54, 56 und die Kreissägen 46, 48 radial nach innen zum Baum 102 hin verschwenkt, bis die Abstandsräder 54, 56 am Baum 102 anliegen. Umgekehrt werden die Lastarme 24 und 32 vom Baum 102 radial weg nach außen bewegt, wenn die Kolbenstangen 62, 64 eingezogen werden. Die für das Verschwenken der Lastarme 24, 32 benötigte Kraft ist relativ gering, so dass für den Betrieb jedes Pneumatikzylinders 58, 60 ein eigener kompakter und leichter Kompressor ausreichend ist, von denen jeder mit einer eigenen Batterie betrieben wird. Die beiden Kompressoren und Batterien sind in der Zeichnung wegen der Vielzahl der einzelnen Bauelemente der Vorrichtung 10 nicht gesondert dargestellt.

Durch die in Fig. 4 zu erkennende Achse 66 ist der Drehtisch 12 mit einem unterhalb des Drehtisches 12 befindlichen Zahnrad 68 verbunden, welches von einem Elektromotor 76 angetrieben wird, und durch welches der Drehtisch 12 in seiner geschlossenen Stellung kreisförmig um den Baum 102 herum bewegt wird. Dabei bewegen sich auch die Kreissägen 44, 46 um den Baum und gleichzeitig rollen die am Baum 102 anliegenden Abstandsräder 54, 56 um den Baum 102 herum. Der kreisförmige Antrieb des Zahnrades 68 kann durch mehrere auf der unteren Seite des Drehtisches 12 angeordnete Führungsrollen 70 stabilisiert werden, die zwischen dem Drehtisch 12 und der oberen, dem Drehtisch 12 zugewandten Seite des Zahnrades 68 angeordnet sind. Die waagerecht angeordneten Führungsrollen 70 besitzen eine umlaufende Nut (in der Zeichnung nicht zu erkennen), mit der sie auf einem inneren Ring abrollen, der mit dem Rahmen 82 in Verbindung steht.

Neben dem oberen Teil der Vorrichtung 10 mit den wesentlichen Bestandteilen Drehtisch 12, Zahnrad 68, Hebel 18, 20, Abstandsräder 54, 56 und Kreissägen 46, 48 umfasst die erfindungsgemäße Vorrichtung 10 noch einen unteren kreisförmigen Rahmen 82, der zusammen mit dem oberen Teil der Vorrichtung 10 ein Grundgestell zur Befestigung der benötigten Bauteile der Vorrichtung 10 bildet. Zwischen dem Rahmen 82 und dem oberen Teil der Vorrichtung 10 erstrecken sich drei um 120° kreisförmig zueinander versetzt angeordnete Pneumatikzylinder 86, 88, 90 mit zugeordneten Kolbenstangen 92, 94, 96.

Am Rahmen 82 sind drei um 120° kreisförmig zueinander versetzt angeordnete Riementräger 78 befestigt, welche jeweils einen länglichen Antriebsriemen 74 aufnehmen. Jeder der Antriebsriemen 74 wird von einem eigenen Elektromotor 80 angetrieben, so dass die mit vorgegebenem Druck am Baum 102 anliegenden Antriebsriemen 74 die Vorrichtung 10 entlang des Baumes 102 nach oben und unten bewegen können. Damit sich die Antriebsriemen 74 möglichst exakt gerade in vertikaler Richtung bewegen, können jedem Antriebsriemen ein Paar von Führungsrädern 72 zugeordnet werden, die während der vertikalen Bewegung der Vorrichtung 10 am Baum 102 anliegen.

Jeder Riementräger 78 besitzt einen Schwenkarm 110, 112 und 114, der sich schräg von innen oben nach außen unten erstreckt. Zu beiden Seiten jedes Schwenkarmes 110, 112, 114 ist jeweils eine senkrecht verlaufende Stange 104 und 106 am Rahmen 82 befestigt. An ihren unteren Enden sind an den jeweils paarweise angeordneten Stangen 104, 106 bei jedem Paar waagerecht verlaufende Stifte 108 vorgesehen, welche an der Innenseite der betreffenden Schwenkarme 110, 112, 114 anliegen. Mittels der drei Schwenkarme 110, 112, 114 und der Stangen 104, 106 mit den Stiften 108 lassen sich die drei Antriebsriemen 74, radial nach innen in Richtung zum Baum 102 hin bewegen, bis sie mit einem einstellbaren Druck am Baum anliegen und in der Lage sind, die Vorrichtung 10 entlang des Baumes 102 nach oben - und abschließend wieder nach unten - zu bewegen.

Das radiale Verschieben der Antriebsriemen 74 erfolgt dadurch, dass der Abstand zwischen dem unteren Rahmen 82 und dem oberen Teil der Vorrichtung 10 verändert wird. Wenn zum Beispiel die Kolbenstangen 92, 94, 96 der Pneumatikzylinder 86, 88, 90 ausgefahren werden, vergrößert sich der Abstand zwischen dem unteren Rahmen 82 und dem oberen Teil der Vorrichtung 10. Wegen des Zusammenwirkens der Stifte 108 mit den Schwenkarmen 110, 112, 114 schwenken die Schwenkarme 110, 112 und 114 derart, dass die Antriebsriemen 74 radial nach außen in eine Position für Bäume 102 mit relativ großem Durchmesser geeignet sind (vgl. Fig. 4).

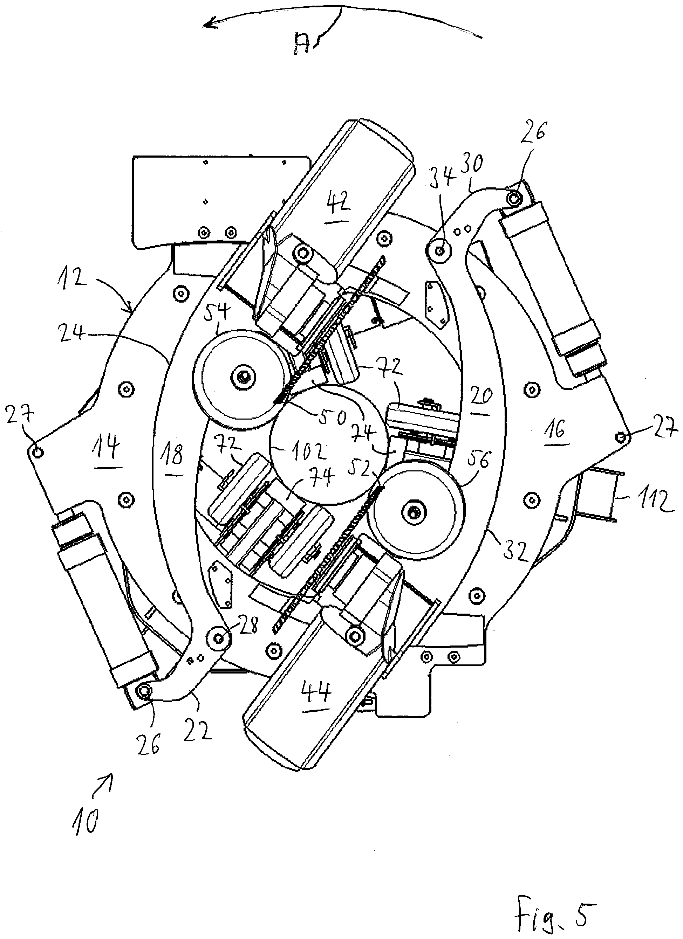

Wird umgekehrt der Abstand zwischen dem unteren Rahmen 82 und dem oberen Teil der Vorrichtung 10 verringert, schwenken die unteren Enden der Schwenkarme 110, 112, 114 in anderer Richtung, und die Antriebsriemen bewegen sich radial nach innen in eine Position für Bäume 102 mit kleinerem Durchmesser (vgl. Fig. 5).

Gemäß Fig. 2 und Fig. 3 sind nicht nur der obere Drehtisch 12 und das Zahnrad 68 auseinanderklappbar (und auch wieder zusammenklappbar), vielmehr kann auch der untere Rahmen 82 auseinandergeklappt werden. Zu diesem Zweck sind die beiden Rahmenhälften des Rahmens 82 um einen gemeinsamen Bolzen 84 verschwenkbar.

Fig. 3 zeigt die Vorrichtung 10 in geöffneter Stellung, um einen Baum 102 aufzunehmen. Am Baum 102 sind schematisch Äste 100 zu erkennen, die normalerweise direkt am Baum 102 kurze Verdickungen 98 besitzen. Beim Entasten der Bäume 102 wird angestrebt, die Äste 100 möglichst kurz abzusägen. Deshalb wird der Abstand zwischen den Kreissägen 46, 48 mit Hilfe der Abstandsräder 54, 56 derart eingestellt, dass die Äste 100 in der geschlossenen Arbeitsposition der Vorrichtung 10 unmittelbar an den Verdickungen 98 abgesägt werden und die Verdickungen 98 zurückbleiben.

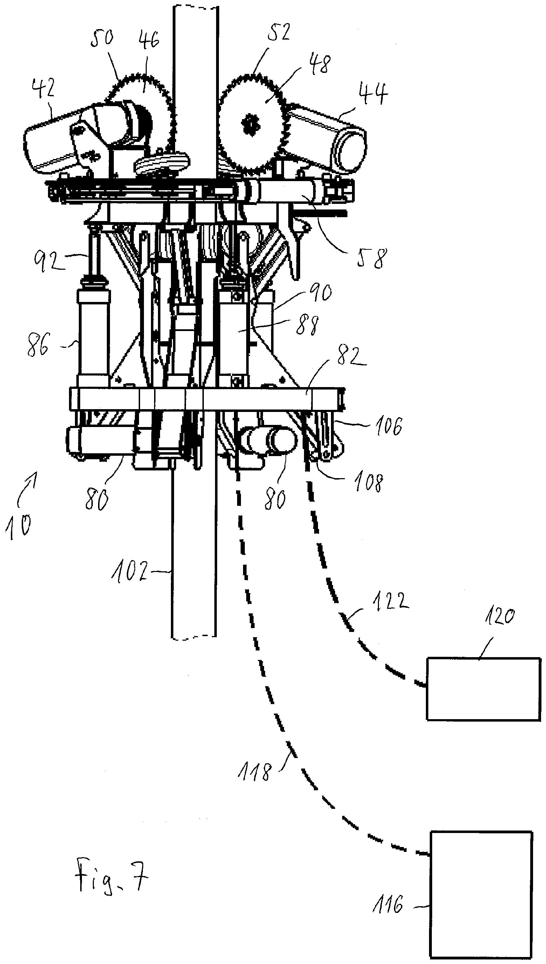

Nachdem die offene Vorrichtung 10 gemäß Fig. 3 um den Baum 102 positioniert ist, wird die Vorrichtung 10 geschlossen, indem der obere Teil mit Drehtisch 12, Kreissägen 46, 48, Zahnrad 68 und Abstandsräder 54, 56 sowie der untere Rahmen 82 mit den Antriebsriemen 74 zusammengeklappt und verriegelt werden. Danach werden die Elektromotoren 42, 44 eingeschaltet, die von einem außerhalb des Baumes 102 und außerhalb der Vorrichtung 10 aufgestellten Stromaggregat 116 gemäß Fig. 7 über eine elektrische Leitung 118 mit Strom versorgt werden. Außerdem werden die Kolbenstangen 62, 64 der Pneumatikzylinder 58, 60 ausgefahren, wodurch die Lastarme 24 und 32 radial nach innen zum Baum 102 hin so weit verschwenkt werden, bis die Abstandsräder 54, 56 am Baum 102 anliegen. Diese Position der Vorrichtung 10 ist besonders gut in Fig. 4 und 5 bei Bäumen 102 mit unterschiedlichen Durchmessern zu erkennen, wobei sich die Kreissägen 46, 48 im gewünschten geringen Abstand vom Baum 102 befinden.

Nachdem die Abstandsräder 54, 56 an den Baum 102 herangeschwenkt sind, wird der Elektromotor 76 eingeschaltet, der über das schon genannte Stromaggregat 116 mit Strom versorgt wird. Als Folge davon beginnt das Zahnrad 68 sich kreisförmig zu drehen, so dass sich auch der Drehtisch 12 und die Kreissägen 46, 48 kreisförmig in Richtung des Pfeiles A drehen (Fig. 4 und Fig. 5).

Nun werden die drei Pneumatikzylinder 86, 88, 90 gemeinsam mittels eines außerhalb der Vorrichtung 10 und des Baumes 102 befindlichen Kompressors 120 gemäß Fig. 7 über einen Druckschlaub 122 angesteuert, um durch Veränderung des Abstandes zwischen dem oberen Teil der Vorrichtung 10 und dem unteren Rahmen 82 in der weiter oben beschriebenen Weise die drei um 120° zueinander versetzt angeordneten Antriebsriemen 74 mit einem definierten Druck gegen den Baum 102 zu drücken. Zugleich gelangen dabei auch die jeweiligen Führungsräder 72 in Kontakt mit dem Baum 102.

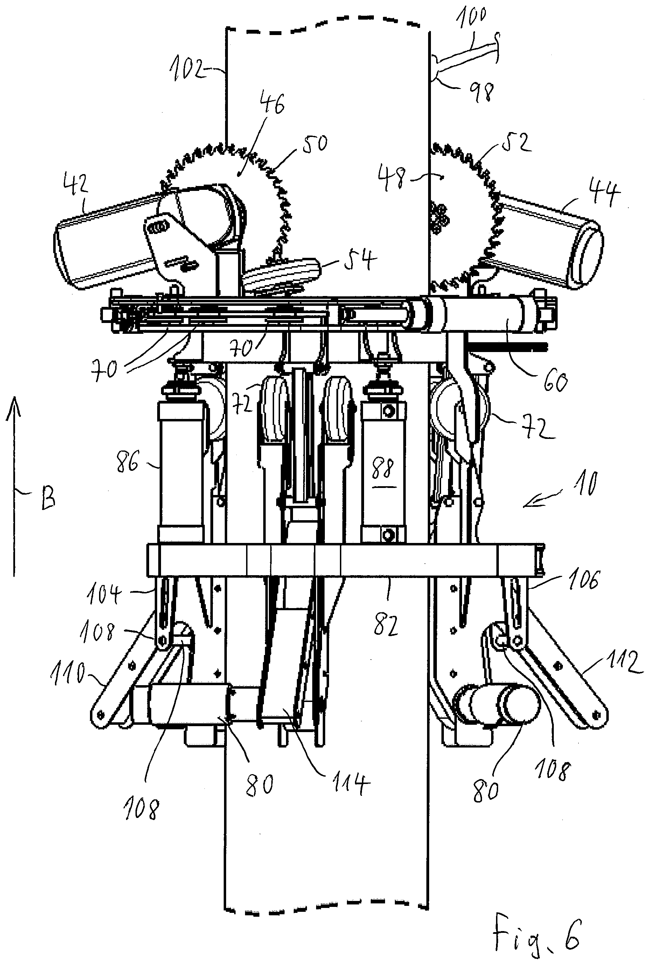

Schließlich werden noch die jedem Antriebsriemen 74 zugeordneten Elektromotoren 80 eingeschaltet, die von dem Stromaggregat 116 gespeist werden. Die mit Druck am Baum 102 anliegenden Antriebsriemen 74 bewegen nunmehr den Rahmen 82 - und damit die gesamte Vorrichtung 10 - am Baum 102 entlang nach oben (Pfeile B in Fig. 6 und Fig. 7) während sich gleichzeitig die Kreissägen 46, 48 und der Drehtisch 12 relativ zum Rahmen 82 kreisförmig um den Baum 102 herum bewegen und die Äste 110 absägen. Durch die Überlagerung der senkrechten Bewegung (Pfeile B) und der kreisförmigen Bewegung (Pfeil A) bewegen sich die Kreissägen schraubenlinienförmig nach oben. Daher sind die Abstandsräder 54, 56 nicht waagerecht, sondern leicht schräg angeordnet, damit sie entlang der Schraubenlinie am Baum 102 abrollen können. Wie weiter oben beschrieben, rollen die Führungsrollen 70 mit ihren umlaufenden Nuten auf einen Ring ab, der mit dem Rahmen 82 verbunden ist. Somit kann sich der Drehtisch 12 und das Zahnrad 68 relativ zum Rahmen 82 kreisförmig drehen. Der Rahmen 82 selbst dreht sich nicht, sondern bewegt sich in vertikaler Richtung.

Um die sich kreisförmig um den Baum 102 bewegenden Kreissägen 46, 48 an jeder Stelle der Kreisbahn mit Strom versorgen zu können, sind im Drehtisch zwei parallele nicht gesondert dargestellte Stromschienen vorgesehen, die kreisförmig verlaufen und die über je eine ortsfeste Kontaktzunge gleiten, die jeweils mit dem Stromaggregat 116 verbunden sind. Somit kann jeder der kreisförmig umlaufenden Elektromotoren 42, 44 über die Stromschienen gespeist werden.

Wenn die Vorrichtung 10 bis zur gewünschten Höhe entlang des Baumes 102 verfahren ist und die Äste 100 bis dahin abgesägt worden sind, können die Kreissägen 46, 48 vom Baum 102 weggeschwenkt werden und die Elektromotoren 42, 44 können abgeschaltet werden. Nunmehr wird die Antriebsrichtung der Antriebsriemen 74 umgekehrt, so dass die Vorrichtung 10 am Baum 102 herunterfährt.

Wie Fig. 4 und Fig. 5 zeigen, befinden sich die Kreissägen 46, 48 sowohl bei Bäumen 102 mit großem Durchmesser als auch bei Bäumen 102 mit kleinerem Durchmesser erfindungsgemäß stets in einer solchen Position zueinander, dass ihre jeweiligen einander gegenüberliegenden und die Äste 100 abschneidenden Zähne 50, 52 immer diametral während der kreisförmigen Bewegung der Kreissägen 46, 48 verlaufen. Die Äste 100 werden somit unabhängig vom jeweiligen Durchmesser des Baumes 102 stets an diametralen Punkten des Baumes 102 abgesägt.

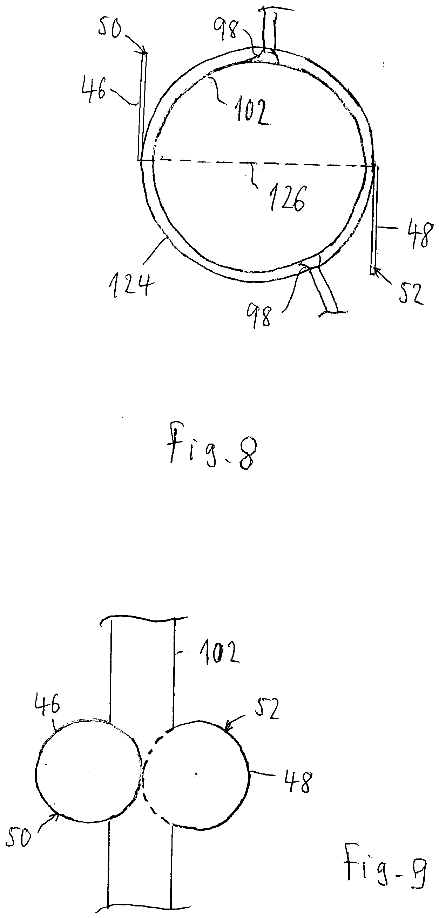

Zur näheren Erläuterung wird nachfolgend auf Fig. 8 und Fig. 9 Bezug genommen, welche die Kreissägen 46, 48 schematisch in einer Draufsicht (Fig. 8) und in einer Seitenansicht (Fig. 9) an einem Baum 102 zeigen. Zur Verdeutlichung des weiter oben beschriebenen Abstandes, in welchem sich die Kreissägen 46, 48 um den Baum 102 herum bewegen, ist in Fig. 8 ein Kreis 124 mit einem Durchmesser 126 dargestellt. Bekanntlich werden als diametral zwei Punkte auf einem Kreis bezeichnet, deren Verbindungsstrecke den Kreismittelpunkt beinhaltet, wobei die Länge dieser Verbindungsstrecke dem Durchmesser 126 des Kreises 124 entspricht. Daher sind die die jeweiligen Äste 100 absägenden Zähne 50, 52 der einander gegenüberliegenden Kreissägen 46, 48 stets in diametraler Anordnung zueinander, wie auch in Fig. 9 zu erkennen ist, in welcher der nicht sichtbare Teil der rechten, hinteren Kreissäge 48 gestrichelt dargestellt ist.

Mit Ausnahme der Pneumatikzylinder 86, 88 und 90 werden bei der Erfindung sämtliche Antriebseinheiten in vorteilhafter Weise elektrisch betrieben. In einem Ausführungsbeispiel der Erfindung beträgt dabei der gesamte Energiebedarf nur 7 kW. Hydraulikleitungen sind nicht erforderlich, so dass eine Verschmutzung des Bodens durch möglicherweise austretendes Öl vermieden ist.

Die Höhe, bis zu der Baumstämme entastet werden können, ist bei der Erfindung praktisch unbegrenzt. In vorteilhafter Weise können Aststärken bis zu 7 cm problemlos bearbeitet werden. Durch die spezielle Sägetechnik mit zwei gegenüberliegenden Kreissägen 46, 48 mit nicht geschränkten Zähnen 50, 52 und mit einer bevorzugten Drehzahl von jeweils 6500 U/min wird ein sauberer Schnitt beim Entasten erzielt.

In Versuchen hat sich gezeigt, dass mit der erfindungsgemäßen Vorrichtung 10 25 bis 30 Bäume pro Stunde bei 12 m Astungshöhe problemlos entastet werden können. Dabei benötigt die erfindungsgemäße Vorrichtung 10 pro Baum 102 lediglich etwa 1 Minute für eine vollständige Entastung bei 12 m Astungshöhe. Durch die Verwendung der drei um 120° versetzt zueinander angeordneten Antriebsriemen 74 ergibt sich in vorteilhafter Weise nur ein minimaler Rindendruck auf die Baumrinde von ca. 350 g/cm2. Das Gesamtgewicht eines Ausführungsbeispiels der erfindungsgemäßen Vorrichtung beträgt lediglich ca. 55 kg, so dass die erfindungsgemäße Vorrichtung 10 in vorteilhafter Weise von einer Person allein bedient werden kann und eine einfache Handhabung gewährleistet ist. Der Drehtisch 12 vollführt in etwa 2 Sekunden eine komplette Umdrehung.

### Bezugszeichenliste

### (ist Teil der Beschreibung)

- 10: Vorrichtung
- 12: Drehtisch
- 14: halbkreisförmiges Segment
- 16: halbkreisförmiges Segment
- 18: Hebel
- 20: Hebel
- 22: Kraftarm
- 24: Lastarm
- 26: Verbindungsteil
- 27: Verbindungsteil
- 28: Drehpunkt
- 30: Kraftarm
- 32: Lastarm
- 34: Drehpunkt
- 36: Verriegelung
- 38: Motorhalterung
- 40: Motorhalterung
- 42: Elektromotor
- 44: Elektromotor
- 46: Kreissäge
- 48: Kreissäge
- 50: nicht geschränkte Zähne
- 52: nicht geschränkte Zähne
- 54: Abstandsrad
- 56: Abstandsrad
- 58: Pneumatikzylinder
- 60: Pneumatikzylinder
- 62: Kolbenstange
- 64: Kolbenstange
- 66: Achse
- 68: Zahnrad
- 70: Führungsrolle
- 72: Führungsräder
- 74: Antriebsriemen
- 76: Elektromotor
- 78: Riementräger
- 80: Elektromotor
- 82: Rahmen
- 84: Bolzen
- 86: Pneumatikzylinder
- 88: Pneumatikzylinder
- 90: Pneumatikzylinder
- 92: Kolbenstange
- 94: Kolbenstange
- 96: Kolbenstange
- 98: Verdickung
- 100: Ast
- 102: Baum
- 104: Stange
- 106: Stange
- 108: Stift
- 110: Schwenkarm
- 112: Schwenkarm
- 114: Schwenkarm
- 116: Stromaggregat
- 118: elektrische Leitung
- 120: Kompressor
- 122: Druckschlauch
- 124: Kreis
- 126: Durchmesser
- A: Pfeil
- B: Pfeil

## Patentansprüche

1. Vorrichtung (10) zum Entfernen der Äste (100) von lebenden Bäumen (102),
- mit einem Grundgestell zur Aufnahme und Befestigung der Bauteile der Vorrichtung (10)
- mit versetzt zueinander angeordneten Antriebsriemen (74), die an die Rinde des Baumes (102) heran bewegbar sind, mit Druck an der Rinde anliegen und die Vorrichtung (10) am Baum (102) nach oben und anschließend wieder nach unten bewegen und anschließend vom Baum (102) weg bewegbar sind,
- mit einem Schneidwerkzeug zum Entfernen der Äste (100) während der Aufwärtsbewegung der Vorrichtung (10), wobei das Schneidwerkzeug von einer Ruheposition in eine Arbeitsposition zum Entfernen der Äste (100) bewegbar ist, und das Schneidwerkzeug durch eine bewegbare Kreissäge (46, 48) mit nicht geschränkten Zähnen (50, 52) gebildet ist,
**dadurch gekennzeichnet, dass** das Schneidwerkzeug durch zwei einander gegenüberliegende kreisförmig um den Baum (102) herum bewegbare Kreissägen (46, 48) mit nicht geschränkten Zähnen (50, 52) gebildet ist, dass die den Ast (100) jeweils absägenden Zähne (50, 52) der beiden einander gegenüber angeordneten Kreissägen (46, 48) unabhängig vom jeweiligen Durchmesser des Baumes (102) immer diametral und in einem vorgegebenen gleichen Abstand vom Baum (102) verlaufen, so dass die Äste (100) unabhängig vom jeweiligen Durchmesser des Baumes (102) stets an diametralen Punkten des Baumes (102) abgesägt werden, weiterhin umfassend
- einen in waagerechter Richtung in einem Kreis um den Baum (102) drehbaren Drehtisch (12), wobei
- der Drehtisch (12) zwei halbkreisförmige Segmente (14, 16) umfasst, die mittels einer gemeinsamen Achse (66) miteinander in Verbindung stehen und um diese Achse (66) auseinanderklappbar und in ihrer Arbeitsposition zu einem Kreis zusammenklappbar und arretierbar sind,
- auf jedem halbkreisförmigen Segment (14, 16) ein um einen Drehpunkt (28, 34) verschwenkbarer Hebel (18, 20) mit je einem Kraftarm (22, 30) und je einem Lastarm (24, 32) angeordnet ist,
- an den den Drehpunkten (28, 34) der Hebel (18, 20) abgewandten äußeren Enden der Lastarme (24, 32) jeweils die als Schneidwerkzeug dienende Kreissäge (46, 48) angeordnet ist, die sich zusammen mit dem Drehtisch (12) kreisförmig um den Baum (102) herumbewegen,
- die Kreissägen (46, 48) in der Weise auf den zugeordneten Lastarmen (24, 32) angeordnet sind, und die Hebel (18, 20) in der Weise verschwenkbar sind, dass die den Ast (100) jeweils absägenden Zähne (50, 52) der beiden Kreissägen (46, 48) unabhängig vom aktuellen Durchmesser des Baumes (102) immer diametral und im gleichen Abstand vom Baum (102) verlaufen, so dass die Äste (100) unabhängig vom jeweiligen Durchmesser des Baumes (102) stets an diametralen Punkten abgesägt werden.

2. Vorrichtung nach Anspruch 1, **dadurch gekennzeichnet, dass** der Abstand der Zähne (50, 52) der Kreissägen (46, 48) vom Baum (102) durch zwei auf den Hebeln (18, 20) diametral gegenüberliegend angeordneten und radial verschiebbaren und arretierbaren Abstandsräder (54, 56) einstellbar ist.

3. Vorrichtung nach Anspruch 1, **dadurch gekennzeichnet, dass** jedem Hebel (18, 20) ein Pneumatikzylinder (58, 60) mit je einer Kolbenstange (62, 64) zugeordnet ist, wodurch die Hebel (18, 20) verschwenkbar sind, und dass jeder Pneumatikzylinder (58, 60) einen eigenen elektrisch betriebenen Kompressor besitzt, der jeweils elektrisch mit Hilfe einer Batterie betrieben wird.

4. Vorrichtung nach Anspruch 1, **dadurch gekennzeichnet, dass** sich zwischen dem Drehtisch (12) und einem unterhalb des Drehtisches (12) befindlichen und zusammen mit dem Drehtisch (12) aufklappbaren und zusammenklappbaren Rahmen (82) drei um 120° kreisförmig zueinander versetzt angeordnete Pneumatikzylinder (86, 88, 90) mit Kolbenstangen (92, 94, 96) erstrecken, und dass an dem Rahmen (82) drei um 120° kreisförmig zueinander versetzt angeordnete Antriebsriemen (74) vorgesehen sind.

5. Vorrichtung nach Anspruch 4, **dadurch gekennzeichnet, dass** die Antriebsriemen (74) durch Veränderung des gegenseitigen Abstandes zwischen dem Drehtisch (12) und dem Rahmen (82) mittels der drei Pneumatikzylinder (86, 88, 90) radial bewegbar und mit einem wählbaren Druck an die Rinde des Baumes (102) andrückbar sind.

6. Vorrichtung nach Anspruch 4, **dadurch gekennzeichnet, dass** die drei Pneumatikzylinder (86, 88, 90) über einen Druckschlauch (122) mit einem außerhalb der Vorrichtung (10) befindlichen Kompressor (120) betrieben sind.

7. Vorrichtung nach Anspruch 1, **dadurch gekennzeichnet, dass** der Drehtisch (12) in seiner zusammengeklappten Arbeitsstellung von einem unterhalb des Drehtisches (12) angeordneten Zahnrad (68) angetrieben ist, welches seinerseits von einem Elektromotor (76) angetrieben ist, und welches zusammen mit dem Drehtisch (12) auseinanderklappbar und zusammenklappbar ist.

8. Vorrichtung nach Anspruch 1, **dadurch gekennzeichnet, dass** jede Kreissäge (46, 48) durch einen eigenen Elektromotor (42, 44) angetrieben ist.

9. Vorrichtung nach Anspruch 7 und 8, **dadurch gekennzeichnet, dass** der das Zahnrad (68) antreibende Elektromotor (76) mit einem außerhalb der Vorrichtung (10) befindlichen Stromaggregat (116) über eine elektrische Leitung (118) verbunden ist.

## Claims

1. Apparatus (10) for removing the branches (100) from living trees (102),
- having a basic framework for accommodating and fastening the components of the apparatus (10),
- having mutually offset drive belts (74) which can be moved up to the bark of the tree (102), butt under pressure against the bark and move the apparatus (10) upwards, and then downwards again, on the tree (102) and then can be moved away from the tree (102),
- having a cutting tool for removing the branches (100) during the upward movement of the apparatus (10), wherein the cutting tool can be moved from a rest position into an operating position for the purpose of removing the branches (100), and the cutting tool is formed by a movable circular saw (46, 48) with non-set teeth (50, 52), **characterized in that** the cutting tool is formed by two mutually opposite circular saws (46, 48) which have non-set teeth (50, 52) and can be moved in a circle around the tree (102), and **in that** the teeth (50, 52), which belong to the two mutually opposite circular saws (46, 48) and saw off the branch (100) in each case, are always diametrically opposed and are spaced apart from the tree (102) by a predetermined equal distance, regardless of the respective diameter of the tree (102), and therefore the branches (100) are always sawn off at diametrically opposed points of the tree (102), regardless of the respective diameter of the tree (102), and also comprising
- a turntable (12), which can be rotated in a circle around the tree (102) in a horizontal direction, wherein
- the turntable (12) comprises two semicircular segments (14, 16), which are connected to one another by means of a common pin (66) and can be swung apart from one another, and swung together to form a circle, and arrested, in their operating position, about said pin (66),
- each semicircular segment (14, 16) has arranged on it a lever (18, 20) which can be pivoted about a point of rotation (28, 34) and has a respective force arm (22, 30) and a respective load arm (24, 32),
- the circular saw (46,48), which serves as a cutting tool and together with the turntable (12) moves in a circle around the tree (102), is arranged in each case at the outer ends of the load arms (24, 32), said outer ends being directed away from the points of rotation (28, 34) of the levers (18, 20),
- the circular saws (46, 48) are arranged on the associated load arms (24, 32), and the levers (18, 20) can be pivoted, such that the teeth (50, 52), which belong to the two circular saws (46, 48) and saw off the branch (100) in each case, are always diametrically opposed and are spaced apart from the tree (102) by an equal distance, regardless of the diameter of the tree (102) at any one time, and therefore the branches (100) are always sawn off at diametrically opposed points, regardless of the respective diameter of the tree (102).

2. Apparatus according to Claim 1, **characterized in that** the distance between the teeth (50, 52) of the circular saws (46, 48) and the tree (102) can be adjusted by two radially displacable and arrestable spacing wheels (54, 56) which are arranged in diametrically opposed fashion on the levers (18, 20).

3. Apparatus according to Claim 1, **characterized in that** each lever (18, 20) is assigned a pneumatic cylinder (58, 60) with a respective piston rod (62, 64), as a result of which the levers (18, 20) can be pivoted, and **in that** each pneumatic cylinder (58, 60) has a dedicated electrically operated compressor, which is operated electrically in each case with the aid of a battery.

4. Apparatus according to Claim 1, **characterized in that** three pneumatic cylinders (86, 88, 90), which have piston rods (92, 94, 96) and are offset through 120° in relation to one another in the form of a circle, extend between the turntable (12) and a frame (82), which is located beneath the turntable (12) and can be swung open and together along with the turntable (12), and **in that** three drive belts (74), which are offset through 120° in relation to one another in the form of a circle, are provided on the frame (82).

5. Apparatus according to Claim 4, **characterized in that**, by virtue of the distance between the turntable (12) and the frame (82) being altered by means of the three pneumatic cylinders (86, 88, 90), the drive belts (74) can be moved radially and pressed onto the bark of the tree (102) under a selectable pressure.

6. Apparatus according to Claim 4, **characterized in that** the three pneumatic cylinders (86, 88, 90) are operated via a pressure hose (122) with a compressor (120) located outside the apparatus (10).

7. Apparatus according to Claim 1, **characterized in that**, in its swung-together, operating position, the turntable (12) is driven by a gearwheel (68) which is arranged beneath the turntable (12), is driven, for its part, by an electric motor (76) and can be swung apart and swung together along with the turntable (12).

8. Apparatus according to Claim 1, **characterized in that** each circular saw (46, 48) is driven by a dedicated electric motor (42, 44).

9. Apparatus according to Claim 7 and 8, **characterized in that** the electric motor (76), which drives the gearwheel (68), is connected, via an electric line (118), to a power generator (116) located outside the apparatus (10).

## Revendications

1. Dispositif (10) destiné à éliminer les branches (100) d'arbres vivants (102),
- comprenant un châssis de base pour recevoir et fixer les composants du dispositif (10),
- comprenant des courroies d'entraînement (74) disposées de manière décalée les unes par rapport aux autres, qui peuvent être rapprochées de l'écorce de l'arbre (102), qui s'appliquent avec pression contre l'écorce et qui déplacent le dispositif (10) contre l'arbre (102) vers le haut puis à nouveau vers le bas et qui peuvent ensuite être écartées de l'arbre (102),
- comprenant un outil de coupe pour enlever les branches (100) pendant le déplacement vers le haut du dispositif (10), l'outil de coupe pouvant être déplacé d'une position de repos dans une position de travail pour enlever les branches (100), et l'outil de coupe étant formé par une scie circulaire mobile (46, 48) avec des dents non biseautées (50, 52),
**caractérisé en ce que** l'outil de coupe est formé par deux scies circulaires (46, 48) opposée l'une à l'autre, pouvant être déplacées autour de l'arbre (102) sous forme circulaire, avec des dents non biseautées (50, 52), **en ce que** les dents (50, 52) sciant chacune la branche (100) des deux scies circulaires (46, 48) disposées à l'opposé l'une de l'autre s'étendent indépendamment du diamètre respectif de l'arbre (102) toujours de manière diamétralement opposée et à une distance prédéfinie identique à l'arbre (102) de telle sorte que les branches (100) indépendamment du diamètre respectif de l'arbre (102) soient toujours sciées en des points diamétralement opposés de l'arbre (102), comprenant en outre
- un plateau tournant (12) pouvant tourner dans une direction horizontale suivant un cercle autour de l'arbre (102),
- le plateau tournant (12) comprenant deux segments de forme semi-circulaire (14, 16) qui sont en liaison l'un avec l'autre au moyen d'un axe commun (66) et qui peuvent être ouverts à l'écart l'un de l'autre autour de cet axe (66), et dans leur position de travail, rabattus l'un vers l'autre pour former un cercle et bloqués,
- un levier (18, 20) pouvant pivoter autour d'un centre de rotation (28, 34) avec un bras de force (22, 30) et un bras de charge (24, 32) respectifs étant disposé sur chaque segment de forme semi-circulaire (14, 16),
- aux extrémités extérieures des bras de charge (24, 32) tournées à l'opposé des centres (28, 34) des leviers (18, 20) est à chaque fois disposée la scie circulaire (46, 48) servant d'outil de coupe, les scies circulaires se déplaçant conjointement avec le plateau tournant (12) sous forme circulaire autour de l'arbre (102),
- les scies circulaires (46, 48) étant disposées sur les bras de charge (24, 32) associés et les leviers (18, 20) pouvant être pivotés de telle sorte que les dents respectives (50, 52) des deux scies circulaires (46, 48) sciant la branche (100) s'étendent indépendamment du diamètre actuel de l'arbre (102) toujours de manière diamétralement opposée et à la même distance de l'arbre (102) de telle sorte que les branches (100) soient toujours sciées en des points diamétralement opposés indépendamment du diamètre respectif de l'arbre (102) .

2. Dispositif selon la revendication 1, **caractérisé en ce que** la distance des dents (50, 52) des scies circulaires (46, 48) à l'arbre (102) peut être ajustée par deux roues d'espacement (54, 56) disposées de manière diamétralement opposée sur les leviers (18, 20), déplaçables radialement et pouvant être bloquées.

3. Dispositif selon la revendication 1, **caractérisé en ce qu'**un cylindre pneumatique (58, 60) avec une tige de piston (62, 64) est associé à chaque levier (18, 20) de sorte que les leviers (18, 20) puissent pivoter et **en ce que** chaque cylindre pneumatique (58, 60) possède un compresseur à commande électrique propre qui est entraîné à chaque fois électriquement à l'aide d'une batterie.

4. Dispositif selon la revendication 1, **caractérisé en ce qu'**entre le plateau tournant (12) et un cadre (82) se trouvant en dessous du plateau tournant (12), pouvant être ouvert et fermé par rabattement conjointement avec le plateau tournant (12), s'étendent trois cylindres pneumatiques (86, 88, 90) disposés de manière décalée les uns par rapport aux autres de 120° sur la périphérie, avec des tiges de piston (92, 94, 96) et **en ce que** sur le cadre (82) sont prévues trois courroies d'entraînement (74) disposées de manière décalée les unes par rapport aux autres de 120° sur la périphérie.

5. Dispositif selon la revendication 4, **caractérisé en ce que** les courroies d'entraînement (74) peuvent être déplacées radialement par modification de la distance mutuelle entre le plateau tournant (12) et le cadre (82) au moyen des trois cylindres pneumatiques (86, 88, 90) et peuvent être pressées avec une pression sélectionnable contre l'écorce de l'arbre (102).

6. Dispositif selon la revendication 4, **caractérisé en ce que** les trois cylindres pneumatiques (86, 88, 90) sont entraînés par le biais d'un tuyau de pression (122) avec un compresseur (120) se trouvant à l'extérieur du dispositif (10).

7. Dispositif selon la revendication 1, **caractérisé en ce que** le plateau tournant (12), dans sa position de travail fermée par rabattement, est entraîné par une roue dentée (68) disposée en dessous du plateau tournant (12), qui est pour sa part entraînée par un moteur électrique (76) et qui peut être ouverte ou fermée par rabattement conjointement avec le plateau tournant (12).

8. Dispositif selon la revendication 1, **caractérisé en ce que** chaque scie circulaire (46, 48) est entraînée par un moteur électrique propre (42, 44) .

9. Dispositif selon les revendications 7 et 8, **caractérisé en ce que** le moteur électrique (76) entraînant la roue dentée (68) est connecté par le biais d'une conduite électrique (118) à un générateur électrique (116) se trouvant à l'extérieur du dispositif (10).
